# EUROPÄISCHE PATENTSCHRIFT

(11) **EP 0 829 973 B1**
(45) Veröffentlichungstag und Bekanntmachung des Hinweises auf die Patenterteilung: **28.04.2004**
(21) Anmeldenummer: 97110746.1
(22) Anmeldetag: 01.07.1997
(51) Int. Cl.: H04B 7/12, H04N 5/44, H03J 1/00, H03J 7/18

(54) **Frequenzdiversity-Verfahren für mobilen Fernsehempfang**
Frequency diversity method in mobile television reception
Procédé de diversité de fréquence pour la réception mobile de télévision

(30) Priorität: 13.09.1996 DE 19637327
(43) Veröffentlichungstag der Anmeldung: 18.03.1998
(73) Patentinhaber: FUBA Automotive GmbH & Co. KG, 31162 Bad Salzdetfurth (DE)
(72) Erfinder: Rudolph, Georg, 30926 Seelze (DE); Daginnus, Michael, 38106 Braunschweig (DE); Bösche, Ralf, 30179 Hannover (DE)

(56) Entgegenhaltungen:
- EP-A- 0 275 527
- DE-A- 2 840 533
- US-A- 5 335 010
- PATENT ABSTRACTS OF JAPAN vol. 017, no. 351 (E-1392), 2. Juli 1993 (1993-07-02) & JP 05 048984 A (ALPINE ELECTRON INC), 26. Februar 1993 (1993-02-26)

## Beschreibung

Die Erfindung betrifft ein Frequenzdiversity-Verfahren für den mobilen Empfang von HF-Signalen, insbesondere für den mobilen Fernsehempfang, mit den im Oberbegriff des Hauptanspruchs angegebenen Gattungsmerkmalen.

Frequenzdiversity speziell für Fernsehempfang hat sich bisher nicht durchgesetzt. Es gibt also weder Empfangsgeräte, die automatisch zwischen z.B. zwei innerhalb eines Versorgungsgebiets ausgestrahlten Frequenzen mit demselben Fernsehprogramm wählen und den Empfang auf den Kanal mit der besseren Signalqualität umschalten können, noch gibt es die Möglichkeit der gebietübergreifenden Wahl zwischen z.B. mehr als zwei unterschiedlichen Frequenzen mit demselben Fernsehprogramm, wie sie beim Hör-Rundfunk in Gestalt des "Radio Data System" (RDS) Eingang gefunden hat. RDS ist beim Hör-Rundfunk - neben Raumdiversity (bzw. Mehrantennen-Diversity) - eine Grundlage für den weitgehend störungsfreien und gleichbleibend guten Empfang auf langen Fahrten mit Kraftfahrzeugen. Etwas Vergleichbares für den Fernseh-Rundfunk gibt es noch nicht.

In der Fernsehtechnik ist die feste Speicherung einer bestimmten Zahl Sender mit jeweils einer Frequenz im Empfänger üblich, die manuell durch Einstellen eines Empfangskanals abgerufen werden. Dieses Prinzip versagt beim Fernsehempfang in bewegten Kraftfahrzeugen zumindest an den Grenzen der Versorgungsgebiete - mit Schwächung des aktuell empfangenen Signals - und aus den anderen bekannten Gründen, wie Schwund, Mehrwegeempfang, Interferenzen usw..
Darüber hinaus ist bekannt, daß die Funktion von Diversity-Schaltungen ihrerseits mit Beeinträchtigungen der Wiedergabe verbunden sein kann, wie Störgeräusche während des Umschaltens zwischen Antennen oder Frequenzen und vor allem auf Grund eines öfteren Hin-und Herschaltens zwischen den Signalwegen, wenn die Signalqualität auf den zur Wahl stehenden Kanälen annähernd gleich ist. Dies gilt im besonderen unter den gegenüber dem Hör-Rundfunk wesentlich komplizierteren Betriebsbedingungen des Fernsehens. Hier muß neben allen Korrekturvorgängen zur möglichst kontinuierlichen Bereitstellung eines Signals mit ausreichend hohem Pegel und Signal/Rausch-Abstand immer eine stabile Bildsynchronisation und die Synchronisation von Bild und Ton gewährleistet sein.
Wenn also unter den Bedingungen des Empfangs in einem sich bewegenden Kraftfahrzeug das Diversity-Prinzip zur Verbesserung des Empfangs genutzt werden soll, muß gewährleistet sein, daß die mit dem erhöhten Aufwand erkauften Vorteile nicht durch Mängel der Diversity-Funktion vermindert werden.

Weitere Vorschläge zur Verbesserung des Empfangs sind u.a. in der deutschen Patentanmeldung DE 28 40 533 A beschrieben.
Dort wird ein Rundfunkernpfänger mit zusätzlichen HF/ZF-Teilen (Tuner, d.Vf.) sowie mit Suchlauf-Schaltungen, einem Vergleicher und einem Umschalter ausgestattet. Als weitere Möglichkeit wird eine Mehrantennenanordnung mit dem bekannten Diversity-Prinzip erwähnt. Die Anordnung sucht, wenn ein bestimmtes Programm eingestellt ist, unablässig nach anderen "Sendern" mit diesem Programm, vergleicht im Erfolgsfall die Feldstärken des aktuellen und des aufgefundenen Senders und schaltet bei besserer Qualität den Sender (oder eine Antenne) um. Weitere Vergleichskriterien sind die auf einem Hilfsträger gesendete Programmkennung sowie das Verkehrsfunksignal, wobei über die Verkehrsfunkkennung auch unterschiedliche örtliche Sendebereiche erkannt und berücksichtigt werden können.
Diese Lösungsansätze waren in der Darstellung offensichtlich nicht ganz "zu Ende gedacht". So sind bisher in der einschlägigen Fachwelt Realisierungsformen nicht bekannt geworden. Das ist wahrscheinlich auf Nachteile, wie Störungen und Unruhe des Systems bei öfterem Umschalten, fehlende Lösung bei Wiedergabemängeln in der Einschwingphase bei Senderwechsel usw., zurückzuführen.

Der Erfindung liegt die Aufgabe zugrunde, durch Anwendung des Frequenzdiversity-Prinzips eine Grundlage für den mobilen und dabei stabilen und möglichst ungestörten Empfang von Fernsehprogrammen, die gleichzeitig in mehreren Versorgungsgebieten und auf unterschiedlichen Frequenzen gesendet werden, zu schaffen, wobei der mit der Einführung z.B. zusätzlicher Programmkennungen verbundene Aufwand vermieden werden soll, und wobei Stör- und Nebeneffekte der Diversity-Funktion weitgehend unterbunden werden sollen.

Diese Aufgabe wird erfindungsgemäß mit den im kennzeichnenden Teil des Hauptanspruchs angegebenen Merkmalen gelöst. Die Unteransprüche enthalten bevorzugte Ausführungsdetails und -varianten.

Dabei ist festzustellen, daß das mit der Aufgabe gesteckte Ziel eines weitgehend universellen Prinzips für das automatische Erkennen von Alternativfrequenzen zu einem aktuell eingestellten bestimmten Fernsehprogramm und damit eine Grundlage für die Nutzung von Frequenzdiversity beim Empfang von Fernsehsendungen im bewegten Fahrzeug erreicht wurde.
Die Erfindung umfaßt für den Vergleich den einfachsten Fall, d.h. Nutzung einer Programmkennung, z.B. des VPS-Signals (wenn vorhanden), ebenso wie die Nutzung bestimmter ausgewählter Bereiche des Audio- und Videosignals und kann damit unabhängig vom Vorhandensein von definitiven Informationen mit Adreßanteil innerhalb des übertragenen Frequenzbands und ohne zusätzlichen senderseitigen Aufwand oder Ergänzungen oder Modifikationen des Signals zur Detektion bestimmter Programme verwendet werden.

Die Erfindung wird im folgenden an Hand von Ausführungsbeispielen näher erläutert. In der zugehörigen Zeichnung zeigen
- Figur 1.: Blockschaltbild zur Realisierung des erfindungsgemäßen Frequenzdiversity-Verfahrens für mobilen Fernsehempfang
- Figur 2.: Schaltung wie in Figur 1, für dieAnwendung des Verfahrens für den Ton-Rundfunkempfang

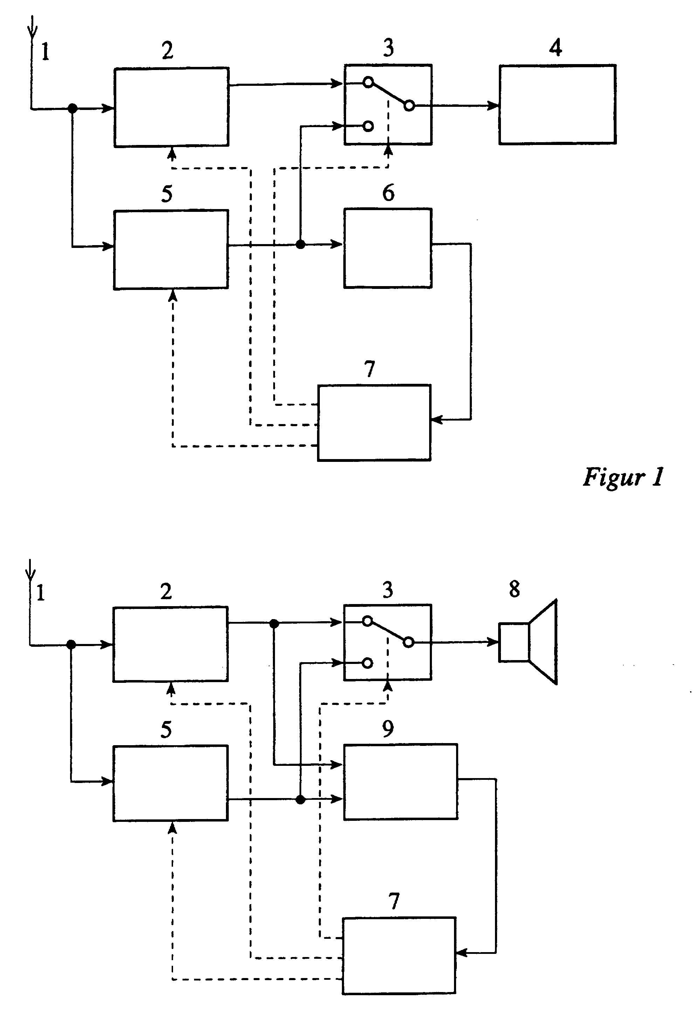

In Figur 1 ist der Empfänger für Ton- und Bildwiedergabe, wie er in jedem Fernsehgerät zu finden ist, mit 2 bezeichnet. Für die Frequenzdiversity-Funktion wurde zusätzlich der Empfänger 5 vorgesehen. Beide Empfänger sind über eine Gabelung mit der Empfangsantenne 1 verbunden. Bei eingeschaltetem Gerät durchsucht der Empfänger 5 der Diversityschaltung, unabhängig von der Signalverarbeitung durch den Hauptempfänger 2, den Sendebereich nach weiteren Sendern mit dem aktuellen Programm. Wird ein anderer Sender gefunden, stoppt der Suchlauf, und das Empfangssignal wird dem VPS-Decoder 6 zugeführt. Wenn es sich dabei um ein Signal mit VPS-Kennung handelt, wird die Kennung mit der VPS-Kennung des über den Hauptempfänger 2 laufenden Senders verglichen. Gleichzeitig prüft und vergleicht die Auswerte- und Steuerungsschaltung 7 die Empfangsqualität der beiden Sender. Wenn die Kennungen übereinstimmen und wenn die Empfangsqualität des aufgefundenen Vergleichssenders die bessere ist, wird der Hauptempfänger 2 auf die neue Frequenz eingestellt. Unmittelbar vor dem Umschaltvorgang wird der Monitor 4 mittels des Signalquellenumschalters 3 an den Empfänger 5 angeschlossen, und der Empfänger 5 ist während des Einschwingvorgangs des Empfängers 2 als Hauptempfänger geschaltet.
Danach wird der Schalter 3 wieder umgeschaltet, und der Empfänger 5 der Diversityschaltung setzt seinen Suchlauf fort.
Die Auswerte- und Steuerungsschaltung 7 hat eine weitere Funktion: Sie speichert alle gefundenen Sender mit ihren VPS-Kennungen und der momentanen Signalqualität in einem nichtflüchtigen Speicher. Die gespeicherten Infomationen werden in den laufenden Prüf- und Vergleichsprozeß einbezogen. So wird für den Hauptempfänger 2 kein separater VPS-Decoder benötigt.
Parallel zu dem Suchlaufüber den gesamten Frequenzbereich - für den eine gewisse Zeit erforderlich ist - werden in regelmäßigen Abständen sequentiell die Frequenzen überprüft, deren Kennung mit dem über den Empfänger 2 laufenden Signal übereinstimmt. Durch die Auswahl und den auf die Vorzugsender beschränkten Vergleich kann das System schneller auf sich ändernde Empfangsverhältnisse reagieren.

Die in Figur 2 gezeigte Schaltung eines Frequenzdiversity-Systems zur Realisierung des erfindungsgemäßen Verfahrens für nur-Tonrundfunk-Empfang arbeitet im Prinzip auf die gleiche Weise wie die Schaltung nach Figur 1. Der Unterschied besteht darin, daß hier die Ausgangssignale des Hauptempfängers 2 und des Empfängers 5 der Diversityschaltung verwertet werden. Die Signale beider Empfänger werden in den Vergleicher 9 gegeben, der sie nach bewertet und danach den entsprechenden Impuls für die Steuerungsschaltung 7 generiert.

## Patentansprüche

1. Frequenzdiversity-Verfahren für den mobilen Empfang von HF-Signalen im Meter- und Dezimeterwellen-Bereich, insbesondere für den mobilen Fernsehempfang, wobei
- das Empfangsgerät im wesentlichen durch einen zusätzlichen Empfänger (5) und eine Auswerteschaltung (7) ergänzt ist und die zusätzlichen Komponenten während der Fahrt kontinuierlich nach allen einstrahlenden Frequenzen eines einmal eingestellten Programms suchen und eine Umschaltung eines Hauptempfängers (2) auf jeweils die Frequenz mit der besten Signalqualität bewirken,
- als Kriterium zum Auffinden der alternativen Frequenzen eines Programms eine vorhandene, aber für andere Zwecke dem Nutzsignal hinzugefügte Senderkennung verwendet wird, oder es werden direkt die Nutzsignale der alternativen Frequenzen mit dem Nutzsignal des eingestellten Programms verglichen und bewertet, und
- zusätzlich zu den Informationen über alternative Empfangsfrequenzen des eingestellten Programms lokale Standortkoordinaten verarbeitet werden, so daß die Auswertung von vornherein auf die gebietsweise zu erwartenden Alternativ-Frequenzen beschränkt und der gesamte Steuerungsprozeß beschleunigt wird,
**gekennzeichnet durch die folgenden Merkmale:**
- Der Steuerimpuls zum Umschalten des Hauptempfängers (2) auf eine andere Frequenz wird gleichzeitig zum Umschalten des Nutzsignalwegs zwischen dem Hauptempfänger und dem Empfänger (5) der Diversity-Schaltung verwendet, derart, daß das Nutzsignal während der **durch** die Einschwingphase des Hauptempfängers (2) gegebenen Lücke über den Empfänger (5) der Diversity-Schaltung geleitet wird.
- Für das Ansprechen der Auswerte- und Steuerungsschaltung (7) und das Generieren des Umschalt-Steuerimpulses werden Schwellenwerte des oder der ausgewählten Kriterien der Signalqualität vorgegeben, so daß bei annähernd gleicher Signalqualität auf den zur Wahl stehenden Frequenzen des eingestellten Programms ein Hin-und- Herschalten zwischen empfangenen Frequenzen vermieden wird.

2. Frequenzdiversity-Verfahren nach Anspruch 1, **dadurch gekennzeichnet, daß** als Senderkennung zum Aufsuchen alternativer Frequenzen eines Fernsehprogramms die VPS-Kennung verwendet wird.

3. Frequenzdiversity-Verfahren nach Anspruch 1, **dadurch gekennzeichnet, daß** bei Vergleich der Nutzsignale auf den verschiedenen Frequenzen an jeweils identischer Position, bezogen auf die Synchronimpulse, Signalproben genommen und verglichen werden, wobei insbesondere das Videatext-, das Luminanz-, das Chrominanz- und das Audiosignal sowie eingespielte Untertitel verwendet werden können, und wobei die ausgewählten Signalanteile vorbereitend vorzugsweise einer Tiefpaßfilterung zum Ausblenden höherfrequenter Störungen unterzogen werden.

4. Frequenzdiversity-Verfahren nach Anspruch 1 und 3, **dadurch gekennzeichnet,**
- **daß** an Stelle des punktuellen Vergleichs der den Nutzsignalen entnommenen Anteile die spektrale Zusammensetzung oder eine Hüllkurve der Signale, vorzugsweise die Hüllkurve der Audiosignale, gegenübergestellt werden, wobei im letzten Fall für den Vergleich vorzugsweise 50 Messungen je s vorgenommen werden, und
- **daß** der Vergleich durch Differenzbildung der Signale erfolgt, wobei Signale als zu demselben Programm gehörend betrachtet werden, wenn über einen bestimmten Zeitraum im Mittel ein vorgegebener absoluter Maximalwert der Differenz nicht überschritten wird.

5. Frequenzdiversity-Verfahren nach Anspruch 1 und 3, **dadurch gekennzeichnet, daß** die Signale, Mittelwert-frei gemacht, durch Kreuzkorrelation verglichen werden, wobei
- die Messungen in Momenten erfolgen, in denen die zu vergleichenden Signale weitgehend störfrei sind und in denen keine Modulationspause vorliegt, und
- Identität dann angenommen wird, wenn der Wert der Kreuzkorrelation etwa die Hälfte der Autokorrelationen erreicht.

6. Frequenzdiversity-Verfahren nach Anspruch 1 bis 5, **dadurch gekennzeichnet, daß** bei Vorhandensein mehrerer zusätzlicher Empfänger (2) zur getrennten Verarbeitung unterschiedlicher Signalkomponenten, vorzugsweise eines Empfängers (2) für Bild und eines Empfängers (2) für Ton bei Fernsehempfang, auf jedem Empfangszweig eine separate Frequenzdiversity-Anordnung arbeitet und dort separat die jeweils beste Bild- und die jeweils beste Tonfrequenz für das eingestellte Programm aufschaltet.

## Claims

1. Frequency diversity process for the mobile reception of HF signals in the metre and decimetre range, particularly for mobile television reception, wherein
- the receiver is essentially supplemented by an additional tuner and an evaluating circuit and during travel the additional components continuously search for all the frequencies of a selected programme which are being beamed in and switch the main tuner to the particular frequency with the best signal quality,
- as a criterion for finding the alternative frequencies of a programme, an existing programme identification signal, albeit added to the desired signal for other purposes, is used, or the desired signals of the alternative frequencies are compared directly with the desired signal of the selected programme and evaluated, and
- in addition to the information on alternative reception frequencies of the selected programme, local positioning coordinates are processed, so that the evaluation is restricted from the outset to the alternative frequencies which can be expected in the area and the entire control process is speeded up,
**characterised by** the following features:
- the control pulse for switching the main tuner (2) to another frequency is simultaneously used to switch the desired signal path between the main tuner and the tuner (5) of the diversity circuit, so that during the interval produced by the settling-in phase of the main tuner (2) the desired signal is passed through the tuner (5) of the diversity circuit;
- for the response of the evaluating and control circuit (7) and the generation of the switchover control pulse, threshold values of the selected signal quality criterion or criteria are pre-set, so that in the event of a roughly similar signal quality at the frequencies available for the selected programme, switching back and forth between the transmitters is avoided.

2. Frequency diversity process according to claim 1, **characterised in that** VPS recognition is used as the programme identification signal for searching for alternative frequencies for a television programme.

3. Frequency diversity process according to claim 1, **characterised in that**, for comparing the desired signals at the various frequencies, signal samples are taken at an identical position, based on the synchronisation pulses, and compared, for which purpose the videotext, luminance, chrominance and audio signal and any subtitles played in may be used, in particular, the selected signal components preferably being prepared by subjecting them to low pass filtering to fade out any high frequency interference.

4. Frequency diversity process according to claims 1 and 3, **characterised in that**
- instead of the spot comparison of the components taken from the desired signals, the spectral composition or an envelope of the signals, preferably the envelope of the audio signals, are compared with one another, while in the latter case 50 measurements per second are preferably carried out for the comparison, and
- the comparison is carried out by differentiation of the signals, the signals being regarded as belonging to the same programme if a given absolute maximum difference is not exceeded on average over a specific time period.

5. Frequency diversity process according to claims 1 and 3, **characterised in that** the signals, made free of average values, are compared by cross-correlation,
- the measurements being carried out at moments when the signals to be compared are substantially free from interference and there is no modulation pause, and
- identity is assumed if the value of the cross-correlation achieves approximately half the autocorrelations.

6. Frequency diversity process according to claims 1 to 5, **characterised in that** when there are a number of tuners (2) for separately processing different signal components, preferably one tuner (2) for picture and one tuner (2) for sound in television reception, a separate frequency diversity arrangement operates on each receiving branch and switches separately to the best picture frequency and the best sound frequency for the selected programme.

## Revendications

1. Procédé de diversité en fréquence pour la réception mobile de signaux HF en ondes métriques et décimétriques, en particulier pour la réception mobile de télévision, dans lequel :
- l'appareil récepteur est pour l'essentiel complété par un récepteur supplémentaire (5) et un circuit d'interprétation (7) et les composants supplémentaires recherchent en permanence pendant le trajet toutes les fréquences reçues pour un programme réglé une seule fois et commandent la commutation d'un récepteur principal (2) à la fréquence ayant la meilleure qualité de signal,
- le critère utilisé pour la recherche des autres fréquences d'un programme est un identifiant d'émetteur existant mais ajouté au signal utile à d'autres fins, ou bien les signaux utiles des autres fréquences sont directement comparés au signal utile du programme réglé et interprétés, et
- outre les informations sur les autres fréquences de réception du programme réglé, des coordonnées de position sont traitées de telle manière que l'interprétation soit limitée aux autres fréquences attendues à l'avance dans chaque secteur et que le processus de commande soit globalement accéléré,
**caractérisé en ce que** :
- l'impulsion de commande pour la commutation du récepteur principal (2) sur une autre fréquence se produit en même temps que la commutation du trajet de signal utile entre le récepteur principal et le récepteur (5) du circuit de diversité, de telle manière que le signal utile soit acheminé par le récepteur (5) du circuit de diversité pendant le temps mort résultant de la période transitoire du récepteur principal (2) ;
- des valeurs de seuil du ou des critères de qualité de signal sélectionnés sont prédéfinies pour le déclenchement du circuit d'évaluation et de commande (7) et la production de l'impulsion de commande de commutation, de manière à éviter, à qualité de signaux approximativement égale entre les fréquences disponibles pour le programme réglé, des commutations répétées entre les fréquences captées.

2. Procédé de diversité en fréquence selon la revendication 1, **caractérisé en ce que** l'identifiant d'émetteur utilisé pour rechercher les autres fréquences d'un programme de télévision est l'identifiant VPS.

3. Procédé de diversité en fréquence selon la revendication 1, **caractérisé en ce que**, lors de la comparaison des signaux utiles aux différentes fréquences, des échantillons de signal sont captés et comparés en une position identique par rapport aux impulsions de synchronisation, en utilisant notamment le signal de vidéotexte, de luminance, de chrominance, ou le signal audio ainsi que les sous-titres ajoutés, les parties de signal sélectionnées étant de préférence préparées par filtrage passe-bas pour éliminer les parasites à haute fréquence.

4. Procédé de diversité en fréquence selon les revendications 1 et 3, **caractérisé en ce qu'**au lieu de la comparaison ponctuelle des fractions prélevées dans le signal utile, la composition spectrale ou une enveloppe des signaux, de préférence l'enveloppe des signaux audio, est comparée, la comparaison utilisant de préférence dans ce dernier cas 50 mesures par seconde, et **en ce que** la comparaison est réalisée par détermination de la différence entre les signaux, les signaux étant considérés comme appartenant au même programme si un maximum absolu prédéterminé de différence n'est pas dépassé en moyenne sur un intervalle de temps déterminé.

5. Procédé de diversité en fréquence selon les revendications 1 et 3, **caractérisé en ce que** les signaux sans moyenne sont comparés par corrélation croisée, les mesures ayant lieu à des moments où les signaux à comparer sont sensiblement exempts de parasites et où il n'y a pas de pause de modulation, et l'identité étant supposée lorsque la valeur de la corrélation croisée correspond approximativement à la moitié des autocorrélations.

6. Procédé de diversité en fréquence selon les revendications 1 à 5, **caractérisé en ce qu'**en présence de plusieurs récepteurs supplémentaires (2) pour le traitement séparé de composantes de signal différentes, avec de préférence un récepteur (2) pour l'image et un récepteur (2) pour le son dans le cas de la réception de télévision, un dispositif de diversité de fréquence séparé fonctionne sur chaque branche de réception et sélectionne séparément la meilleure fréquence pour l'image et la meilleure fréquence pour le son pour le programme réglé.
